# EUROPÄISCHE PATENTSCHRIFT

(11) **EP 1 393 973 B1**
(45) Veröffentlichungstag und Bekanntmachung des Hinweises auf die Patenterteilung: **21.06.2006**
(21) Anmeldenummer: 03090277.9
(22) Anmeldetag: 01.09.2003
(51) Int. Cl.: B60R 21/16, B60Q 5/00

(54) **Lenkrad mit einem Hupenbetätigungselement**
Steering wheel with a horn switching device
Volant avec dispositif de commande d'avertisseur sonore

(30) Priorität: 30.08.2002 DE 10241048
(43) Veröffentlichungstag der Anmeldung: 03.03.2004
(73) Patentinhaber: Takata-Petri AG, 63743 Aschaffenburg (DE)
(72) Erfinder: Bonn, Helmut, 63808 Haibach (DE)
(74) Vertreter: Fischer, Uwe

(56) Entgegenhaltungen:
- DE-A- 19 732 022
- US-A- 4 939 951
- US-A- 5 650 600

## Beschreibung

Die Erfindung bezieht sich auf eine Lenkrad mit den Merkmalen gemäß dem Oberbegriff des Anspruch 1.

Ein derartiges Lenkrad ist aus der deutschen Offenlegungsschrift 197 32 022 A1 bekannt. Bei dem vorbekannten Lenkrad bildet eine Abdeckkappe eines in der Lenkeinrichtung bzw. Lenkradstruktur eines Fahrzeugs integrierten Airbags eine Betätigungsvorrichtung für die Fahrzeughupe. Die Abdeckkappe des Airbags ist über zwei Federelemente federnd an der Lenkradstruktur befestigt. Für eine seitliche Führung der Abdeckkappe in Bezug auf die Lenkradstruktur sind in der Abdeckkappe zwei Zapfen vorgesehen, die in dazu passende Bohrungen in der Lenkradstruktur eingeführt sind. An der Abdeckkappe und an der Lenkradstruktur ist jeweils ein elektrischer Schaltkontakt vorgesehen; durch Drücken auf die federnd gelagerte Abdeckkappe werden die beiden Schaltkontakte geschlossen und die Hupe wird ausgelöst bzw. aktiviert.

Der Erfindung liegt die Aufgabe zugrunde, ein Lenkrad anzugeben, dessen Betätigungselement sich besonders bedienerfreundlich bedienen lässt. Als bedienerfreundlich wird es beispielsweise angesehen, wenn die Hupe stets mit dergleichen Betätigungskraft bzw. Betätigungsdruck ausgelöst wird.

Diese Aufgabe wird erfindungsgemäß durch die Merkmale des Anspruchs 1 gelöst.

Vorteilhafte Ausgestaltungen des erfindungsgemäßen Lenkrades sind in Unteransprüchen angegeben.

Zur Erläuterung der Erfindung zeigen
- Figur 1-: zur allgemeinen Erläuterung ein Beispiel für eine Schalteinrichtung in der Seitenansicht,
- Figur 2 -: die Airbageinheit des Beispiels gemäß der Figur 1 in der Draufsicht,
- Figur 3-: die Scherenvorrichtung gemäß dem Biespiel gemäß der Figur 1 im Detail,
- Figur 4-: ein zweites Beispiel für eine Scherenvorrichtung, zum Zwecke der allgemeinen Erläuterung,
- Figur 5-: ein Beispiel für ein Drehlager für eine Scherenvorrichtung,
- Figur 6 -: ein Beispiel für eine Scherenvorrichtung mit einer Federeinrichtung,
- Figur 7 -: ein Beispiel für eine Scherenvorrichtung mit einer Federeinrichtung und mit elektrischen Kontakten,
- Figur 8 -: ein weiteres Beispiel für eine Schalteinrichtung in der Seitenansicht,
- Figur 9 -: das weitere Beispiel gemäß der Figur 8 in der Draufsicht, und
- Figuren 10 und 11: ein Ausführungsbeispiel der Erfindung.

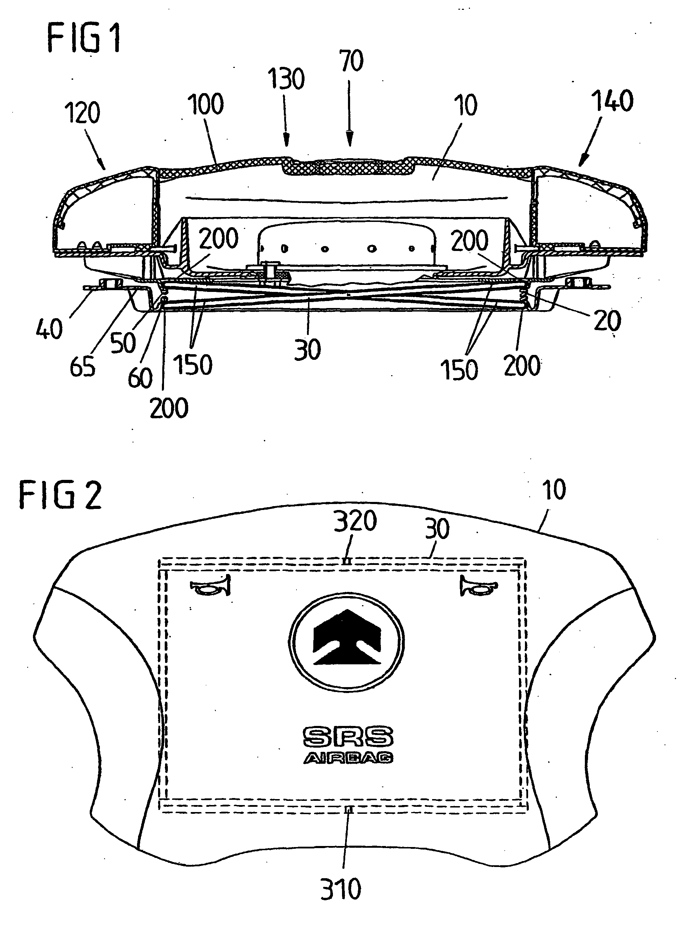

Die Figur 1 zeigt eine Airbageinheit 10, die über eine Federeinrichtung 20 und eine Scherenvorrichtung 30 an einer Lenkeinrichtung 40 befestigt ist. An der Airbageinheit 10 ist ein erster Schaltkontakt 50 befestigt, der mit einem zweiten Schaltkontakt 60 auf einem Kontaktträgerblech 65 der Lenkeinrichtung 40 in Verbindung steht bzw. mit diesem in elektrische Verbindung gebracht werden kann. Der zweite Schaltkontakt 60 wirkt also als Gegenkontakt und ist an der Lenkeinrichtung 40 angeordnet. Konkret wird zwischen dem ersten Schaltkontakt 50 und dem zweiten Schaltkontakt 60 eine elektrische Verbindung hergestellt, wenn die Airbageinheit 10 entgegen der Federkraft der Federeinrichtung 20 in Richtung Lenkeinrichtung 40 gedrückt wird.

Die Bewegung der Airbageinheit 10 in Richtung der Lenkeinrichtung 40 wird dabei durch die Scherenvorrichtung 30 festgelegt. Die Scherenvorrichtung 30 bewirkt nämlich, dass die Airbageinheit 10 ausschließlich senkrecht, das heißt entlang der durch den Pfeil 70 vorgegebenen Richtung - nach unten - bewegt werden kann. Ein Verkippen der Airbageinheit 10 ist also nicht möglich, und zwar unabhängig davon, wie auf die Abdeckkappe 100 der Airbageinheit 10 gedrückt wird.

Dies ist anschaulich durch die Pfeile 120, 130 und 140 in der Figur 1 dargestellt: Unabhängig davon, an welcher Stelle der Airbageinheit 10 und mit welcher Kraftrichtung Druck auf die Airbageinheit 10 ausgeübt wird, bewegt sich diese entlang der durch die Scherenvorrichtung 30 vorgegebenen Richtung 70. In dem Beispiel gemäß der Figur 1 kann sich die Airbageinheit 10 also lediglich parallel zu der durch den Pfeil 70 **vorgegebenen Richtung bewegen.**

In der Figur 1 lässt sich darüber hinaus erkennen, dass die Enden 150 der Scherenelemente der Scherenvorrichtung 30 in Führungslagern 200 gelagert sind, die vorzugsweise durch gleitfähigen Kunststoff gebildet sind. Durch diese Kunststofflager wird eine reibungsarme Bewegung der Scherenvorrichtung 30 ermöglicht.

Die Figur 2 zeigt die Airbageinheit 10 gemäß Figur 1 in der Draufsicht. Man erkennt, dass die Airbageinheit 10 auf der Scherenvorrichtung 30 gelagert ist. Die Scherenvorrichtung 30 ist in der Figur 2 gestrichelt dargestellt und durch zwei rechteckförmige Rahmen gebildet, die durch zwei Drehlager 310 und 320 miteinander verbunden sind.

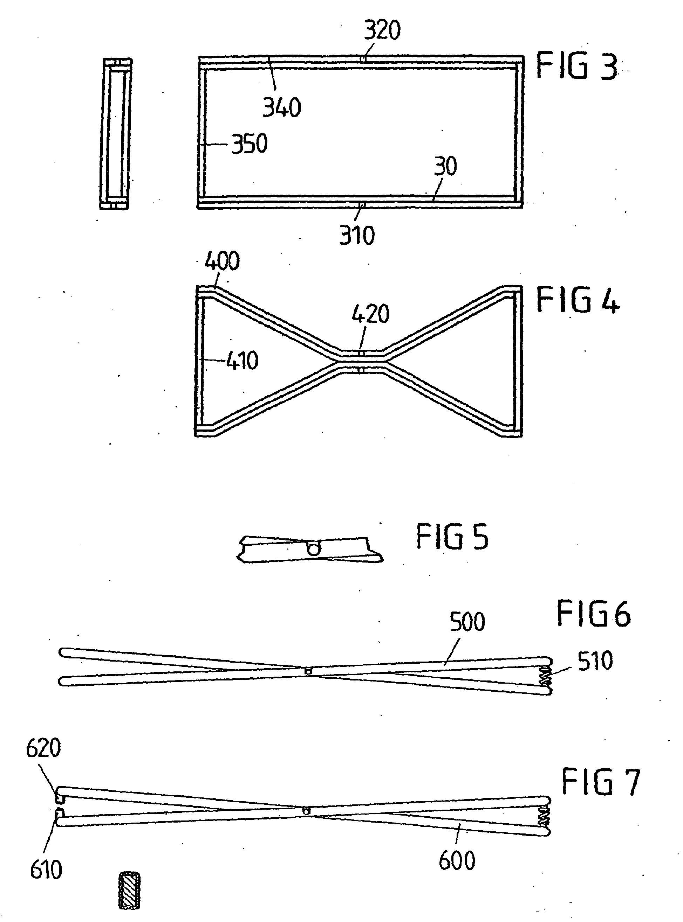

Die Figur 3 zeigt die Scherenvorrichtung gemäß dem Beispiel gemäß den Figuren 1 und 2 nochmals im Detail. Man erkennt die Scherenvorrichtung 30 mit den beiden Drehlagern 310 und 320, die zwei U-förmige Rahmenteile 340 und 350 miteinander verbinden. Die zwei U-förmigen Rahmenteile bilden die Scherenelemente der Scherenvorrichtung und sind gegensätzlich orientiert, wobei das kleinere Rahmenteil 350 von dem größeren Rahmenteil 340 teilweise umgeben wird.

Die Figur 4 zeigt ein zweites Beispiel für eine Scherenvorrichtung für die Schalteinrichtung. Man erkennt ein äußeres Scherenelement 400, dass ein inneres Scherenelement 410 umgibt und mit diesem über ein einziges Drehlager 420 verbunden ist.

Die Figur 5 zeigt im Detail, wie das Drehlager 420 gemäß der Figur 4 bzw. die beiden Drehlager 310 und 320 gemäß der Figur 3 im Detail ausgestaltet sein können.

Die Figur 6 zeigt eine Scherenvorrichtung 500 mit einer Federeinrichtung 510, die am äußeren Ende zweier Scherenelemente der Scherenvorrichtung befestigt ist. Bei Verwendung der Scherenvorrichtung 500 gemäß der Figur 6 in dem Beispiel gemäß der Figur 1 würde die Scherenvorrichtung 500 nicht nur die Scherenvorrichtung 30, sondern auch die Federeinrichtung 20 ersetzen.

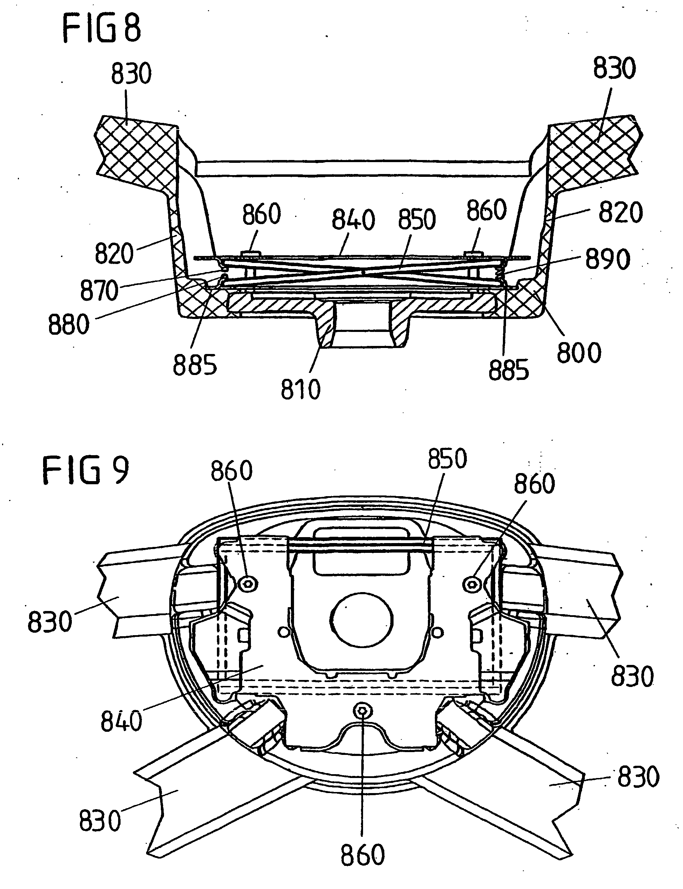

Die Figur 7 zeigt eine Scherenvorrichtung 600, die mit einer Federeinrichtung 510 sowie mit zwei elektrischen Schaltkontakten 610 und 620 ausgestattet ist. Mit den beiden elektrischen Schaltkontakten 610 und 620 lässt sich die Hupe des Fahrzeugs elektrisch auslösen. Bei Verwendung der Scherenvorrichtung 600 gemäß der Figur 7 in dem Biespiel gemäß der Figur 1 würde die Scherenvorrichtung 600 nicht nur die Scherenvorrichtung 30, sondern auch die Federeinrichtung 20 und die Schaltkontakte 50 und 60 ersetzen.

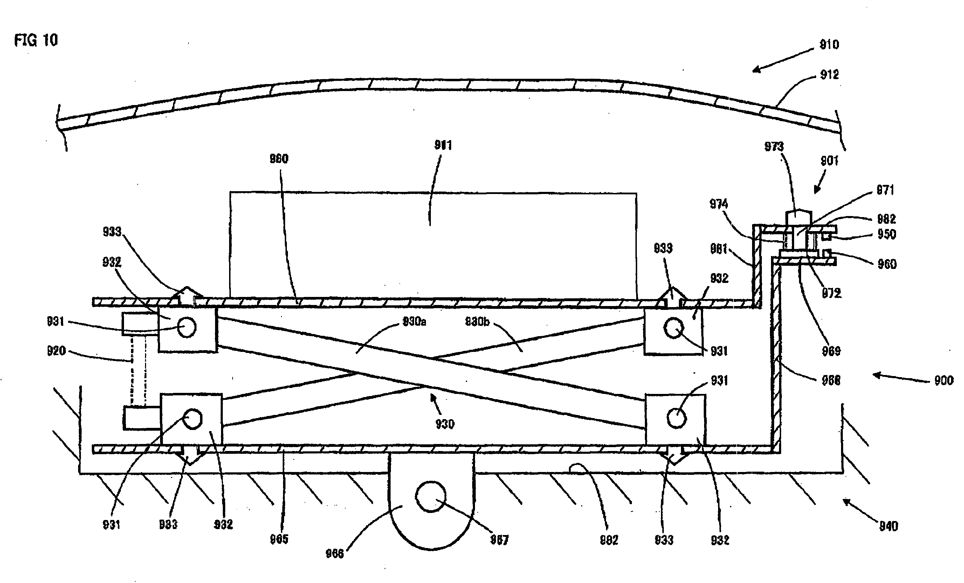

Die Figuren 8 und 9 zeigen ein weiteres Beispiel für eine Schalteinrichtung. Das weitere Beispiel gemäß den Figuren 8 und 9 unterscheidet sich von dem ersten Beispiel gemäß den Figuren 1 und 2 dadurch, dass die Scherenvorrichtung im "Lenkrad zwischen Kontaktblechen (Abdeckblech und Kontaktträgerblech) integriert ist, wohingegen sie beim Beispiel gemäß den Figuren 1 und 2 zwischen Airbag 10 und dem Kontaktträgerblech 65 des Lenkrads 40 angeordnet ist.

Man erkennt in der Figur 8 ein Lenkrad 800 mit einer Lenkradnabe 810, einem Korpus 820 und Lenkradspeichen 830. Ein Abdeckblech 840 liegt auf einer Scherenvorrichtung 850 auf und ist mittels Bundschrauben 860 an dem Lenkrad 800 befestigt. An dem unteren Teil des Abdeckblechs ist ein elektrischer Kontakt 870 angeordnet, der mit einem Gegenkontakt 880 auf einem Kontaktträgerblech 885 zusammenwirkt.

Außerdem erkennt man eine Federeinrichtung 890, die auf die Scherenvorrichtung 850 eine Federkraft ausübt. Zusätzlich oder auch stattdessen kann die Federkraft auch durch Spiralfedern erzeugt werden, die an den Bundschrauben 860 angebracht werden. Dies ist in der Figur 8 der Übersichtlichkeit halber nicht dargestellt.

Die Figur 9 zeigt das Beispiel gemäß der Figur 8 in der Draufsicht. Man erkennt die Scherenvorrichtung 850, die von dem Abdeckblech 840 abgedeckt wird. Das Abdeckblech 840 ist durch die drei Bundschrauben 860 an dem Lenkrad 800 angeschraubt. Im Übrigen zeigt die Figur 9 die Lenkradspeichen 830.

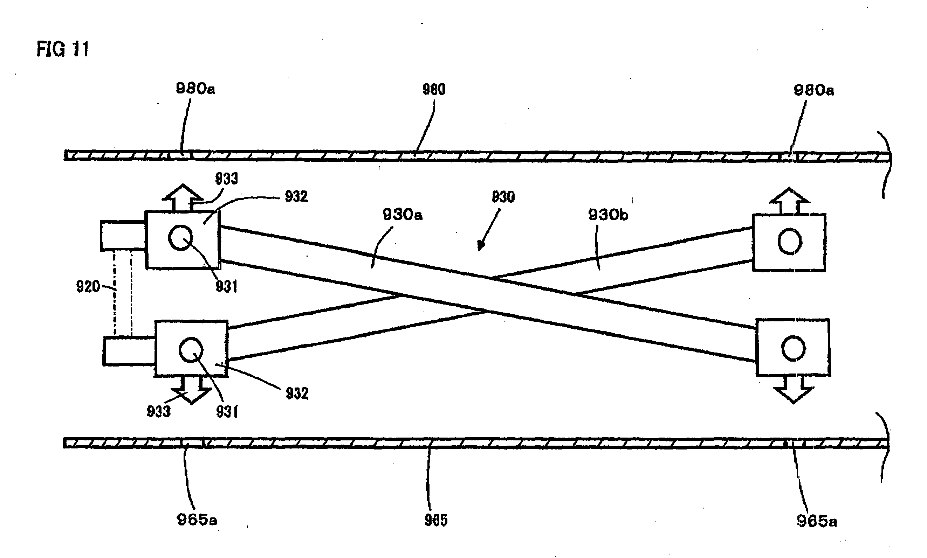

Ein Ausführungsbeispiel der Erfindung ist in den Figuren 10 und 11 dargestellt. Dieses Ausführungsbeispiel enthält eine Schalteinrichtung 901, eine Airbageinheit 910 und ein Lenkrad 900. Die Airbageinheit 910 ist auf einer Abdeckplatte 980 angeordnet.

Die Airbageinheit 910 weist eine Abdeckkappe 912, einen Gasgenerator 911 und einen Gassack auf, der durch den Gasgenerator 911 aufgeblasen wird; davon sind in der Figur 10 jedoch nur die Abdeckkappe 912 und der Gasgenerator 911 gezeigt, da der Gassack selbst aus Gründen der Übersichtlichkeit nicht gezeigt ist.

Die Abdeckplatte 980 (die auch als "Halteelement" bezeichnet werden könnte), auf der die Airbageinheit 910 montiert ist, ist mit einer Trägerplatte 965 (die auch als " Hupenplatte" bezeichnet werden könnte) mittels einer Scherenvorrichtung 930 verbunden. Mit anderen Worten ist die Scherenvorrichtung 930 zwischen der Abdeckplatte 980 und der Trägerplatte 965 angeordnet.

Die Scherenvorrichtung 930 enthält ein Paar Scherenelemente 930a und 930b. Diese Scherenelemente 930a und 930b überschneiden sich in der Form eines "X". Die Scherenvorrichtung 930 sorgt dafür, dass eine Druckkraft, die auf die Abdeckkappe 912 ausgeübt wird, stabilisiert bzw. gleich oder konstant gehalten wird, und zwar unabhängig davon, an welcher Stelle der Abdeckkappe 912 der Benutzer die Druckkraft ausübt. In dieser Hinsicht dient die Scherenvorrichtung 930 als Stabilitätselement, das eine benutzerseitige Druckkraft ausgleicht und konstant hält. Die Scherenvorrichtung 930 kann jede Art einer Scheren-Struktur umfassen, die in der Lage ist, eine benutzerseitige, auf die Abdeckkappe 912 ausgeübte Druckkraft auszugleichen bzw. zu vergleichmäßigen, und die diese Vergleichmäßigung auch dann erreicht, wenn der Benutzer die Abdeckkappe 912 an unterschiedlichen Stellen der Abdeckkappe 912 zum Zwecke der Betätigung der Fahrzeughupe drückt.

Figur 11 zeigt, wie die Scherenvorrichtung 930 an der Abdeckplatte 980 und an der Trägerplatte 965 befestigt wird. Beide Enden der beiden Scherenelemente 930a und 930b weisen jeweils ein Halteelement bzw. Lagerelement 932 auf, das aus Harz oder Kunststoff besteht. Die Halteelemente bzw. Lagerelemente 932 stehen mit den ihnen zugeordneten Scherenelementen 930a und 930b jeweils mittels eines Rotationshalters 931 in Verbindung. Jedes der Scherenelemente 930a und 930b kann auf Grund der Lagerung in dem Rotationshalter 931 relativ zu seinem zugeordneten Halte- bzw. Lagerelement 932 gedreht bzw. geschwenkt werden.

In dem Ausführungsbeispiel gemäß den Figuren 10 und 11 ist an jedem der Halte- bzw. Lagerelemente 932 jeweils ein Clip aus Harz oder Kunststoff angebracht. Die Clips 933 können in Clip-Einführungslöcher 980a und 965a eingeführt werden; die Clip-Einführungslöcher 980a und 965b sind hierzu jeweils in der Abdeckplatte 980 und in der Trägerplatte 965 angeordnet (vgl. Figur 10). Dadurch ist jedes der Halte- bzw. Lagerelemente 932 entweder mit der Abdeckpatte 980 oder mit der Trägerplatte 965 verbunden, und zwar derart, dass ein unbeabsichtigtes Lösen irgendeines der Halte- bzw. Lagerelemente 932 von der Abdeckplatte 980 bzw. der Trägerplatte 965 verhindert wird. Zur Befestigung werden die Clips 933 in die jeweils zugeordneten Clip-Einführungslöcher 980a und 965a eingedrückt. Im Ergebnis kann die Scherenvorrichtung 930 an der Abdeckplatte 980 und an der Trägerplatte 965 sehr einfach in einem einzigen Arbeits- bzw. Montageschritt ("one-touch-manner") angebracht werden.

Außerdem kann die Scherenvorrichtung 930 auch einfach von den Platten 980 und 965 entfernt werden, indem die Clips 933 entfernt bzw. "abgeklippst" werden. Jedes der Halte- bzw. Lagerelemente 932 und jeder der Clips 933 kann aus anderen Materialien als Harz oder Kunststoff bestehen. Beispielsweise können die Halte- bzw. Lagerelemente 932 und die Clips 933 vorzugsweise aus Hartgummi oder Metall bestehen.

Außerdem kann jeder der Clips 933 als integraler Bestandteil bzw. einstückig zusammen mit dem jeweils zugeordneten Halte- bzw. Lagerelement 932 hergestellt werden. Stattdessen kann jeder der Clips 933 auch lösbar oder fest mit dem jeweiligen Halte- bzw. Lagerelement 932 verbunden werden, nachdem das jeweilige Halte- bzw. Lagerelement 932 hergestellt worden ist.

Genauso gut können die Halte- bzw. Lagerelemente 932 zusammen mit den zugehörigen Scherenelementen 930a und 930b als integrale Bestandteile hergestellt werden. Stattdessen kann jedes der Halte- bzw. Lagerelemente 932 auch lösbar oder fest an das zugehörige Scherenelement 930a bzw. 930b angekoppelt werden, nachdem das jeweilige Scherenelement 930a bzw. 930b hergestellt worden ist .

Außerdem - dies zeigt die Figur 10 - ist ein Federelement 920 zwischen den beiden Enden der beiden Scherenelemente 930a und 930b angeordnet. Das Federelement 920 übt eine Vorspannung bzw. Vorspannungskraft in der Weise aus, dass die beiden Scherenelemente 930a und 930b voneinander wegbewegt werden.

Die Abdeckplatte 980 ist mit einer beweglichen Platte 982 mittels einer Verbindungsplatte 981 verbunden. Außerdem ist die Trägerplatte 965 mit einer ortsfesten Platte 969 mittels einer Verbindungsplatte 968 verbunden. Die bewegliche Platte 982 und die ortsfeste Platte 969 sind derart angeordnet, dass sie einander gegenüber liegen. Ein Führungsbolzen 971 ist mittels eines Isolationselementes 972 mit der Oberfläche der ortsfesten Platte 969 verbunden; dabei liegt die ortsfeste Platte 969 der beweglichen Platte 982 gegenüber. Der Führungsbolzen 971 durchdringt die bewegliche Platte 982. Der Führungsbolzen 971 enthält eine Kontrolleinrichtung 973, die die Bewegung der Abdeckplatte kontrolliert. Die Kontrolleinrichtung 973 befindet sich auf der gegenüber liegenden Seite (also der der ortsfesten Platte 969 abgewandten Seite der beweglichen Platte 982). Die Kontrolleinrichtung 973 hat einen größeren Durchmesser als der Durchmesser des Führungsbolzens 971, um zu verhindern, dass die bewegliche Platte 982 sich von der ortsfesten Platte 969 über eine vorgegebene Entfernung hinaus wegbewegen kann.

Außerdem ist eine Feder 974 vorhanden, die den Führungsbolzen 971 umgibt und zwischen der beweglichen Platte 982 und der ortsfesten Platte 969 angeordnet ist. Die Feder 974 übt eine Vorspannung in der Weise aus, dass die bewegliche Platte 982 von der ortsfesten 969 weggedrückt wird. Im Ergebnis wird die bewegliche Platte 982 also durch die Vorspannungskraft der Feder 974 von der ortsfesten Platte 969 weggedrückt, wobei der Entfernungsabstand von der stationären Platte 969 mittels der Kontrolleinrichtung 973 überwacht wird. Wenn der Benutzer die bewegliche Platte 982 bewegt, um die ortsfeste Platte 969 entgegen der Vorspannungskraft der Feder 974 zu bewegen, wird die bewegliche Platte 982 durch den Führungsbolzen 971 zwingend geführt, so dass eine laterale Bewegung gemäß Figur 10 verhindert wird.

Außerdem sind auf den Oberflächen der beweglichen Platte 982 und der ortsfesten Platte 969 ein erster Schaltkontakt 950 und ein zweiter Schaltkontakt 960 vorgesehen; die beiden Schaltkontakte 950 und 960 liegen sich dabei gegenüber. Die beiden Schaltkontakte 950 und 960 bilden eine Schalteinrichtung 901. Die beiden Schaltkontakte 950 und 960 werden elektrisch verbunden, wenn sich die bewegliche Platte 982 der ortsfesten Platte 969 nähert. Im Ergebnis kann somit die Kraftfahrzeughupe aktiviert werden.

Eine Befestigungsplatte 966 ist auf der Bodenseite der Trägerplatte 965 vorgesehen. Ein Befestigungsbolzen 967 kann mit der Befestigungsplatte 966 verbunden werden. Mit der Befestigungsplatte 966 und dem Befestigungsbolzen 967 kann die Trägerplatte 965 lösbar an einem Lenkradkörper 982 des Lenkrades 900 befestigt werden.

Nach dem Ausführuhgäbetepiel der Erfindung sind die Airbageinheit 910, die Abdeckplatte 980, die Scherenvorrichtung 930, die Trägerplatte 965 und die Schalteinrichtung 901 unter Bildung einer vorgefertigten bzw. vormontierten Einheit zusammengesetzt, bevor diese auf dem Lenkrad 900 befestigt wird. Zu diesem Zeitpunkt - also dem Zeitpunkt der Vormontage - kann die Scherenvorrichtung 930 in sehr einfacher Weise mit der Abdeckplatte 980 und der Trägerplatte 965 unter Verwendung der Clips 933 in einem einzigen Arbeits- bzw. Montageschritt, also in einer "one-touch-manner" zusammengesetzt werden. Somit kann die Fertigung ("Vorfertigung") der vorgefertigten Einheit bestehend aus der Airbageinheit 910, der Scherenvorrichtung 930 und der Schalteinrichtung 901 in einfacher Weise durchgeführt werden. Anschließend wird die vormontierte Einheit dann an dem Lenkrad 900 befestigt, indem die Befestigungsplatte 966 an dem Befestigungsbolzen 967 angebracht wird.

### Bezugszeichenliste

- 10: Airbageinheit
- 20: Federeinrichtung
- 30: Scherenvorrichtung
- 40: Lenkeinrichtung
- 50: erster Schaltkontakt
- 60: zweiter Schaltkontakt
- 65: Kontaktträgerblech
- 70: Pfeil
- 100: Abdeckkappe
- 120, 130, 140: Pfeile
- 150: Scherenelemente
- 200: Führungslager
- 310, 320: Drehlager
- 340,350: Rahmenteile
- 400: äußeres Scherenelement
- 410: inneres Scherenelement
- 420: Drehlager
- 500: Scherenvorrichtung
- 510: Federeinrichtung
- 600: Scherenvorrichtung
- 610, 620: elektrische Schaltkontakte
- 800: Lenkrad
- 810: Lenkradnabe
- 820: Korpus
- 830: Lenkradspeichen
- 840: Abdeckblech
- 850: Scherenvorrichtung
- 860: Bundschrauben
- 870: elektrischer Kontakt
- 880: Gegenkontakt
- 885: Kontaktträgerblech
- 890: Federeinrichtung

## Patentansprüche

1. Lenkrad für ein eine Fahrzeughupe aufweisendes Kraftfahrzeug mit einem Betätigungselement (965), das bei Druckbeaufschlagen durch eine Bedienperson die Fahrzeughupe auslöst,
**dadurch gekennzeichnet, dass**
- das Betätigungselement auf einer Scherenvorrichtung (930) derart befestigt oder gelagert ist; dass das Betätigungselement (965) ausschließlich entlang einer durch die Scherenvorrichtung vorgegebenen Richtungbeweglich ist,
- wobei die Scherenvorrichtung (930) an dem Betätigungselement in einer Einschrittart mittels zumindest eines Clips befestigt ist.

2. Lenkrad nach Anspruch 1, **dadurch gekennzeichnet, dass** die Scherenvorrichtung (930) die behutzerseitige Druckkraft zum Auslösen der Fahrzeughupe stabilisiert.

3. Lenkrad nach Anspruch 1 oder 2, **dadurch gekennzeichnet, dass** der zumindest eine Clip an der Scherenvorrichtung (930) befestigt ist, und zwar im Wesentlichen in einem Endbereich eines der Scherenelemente. (930a, 930b), und dass das Scherenelement das Betätigungselement mit dem Lenkradkörper mittels eines Halte- bzw: Lagerelements (932) verbindet.

4. Lenkrad nach Anspruch 3, **dadurch gekennzeichnet, dass** der mindestens eine Clip oder zumindest eines der Halte- bzw. Lagerelemente (932) aus Harz oder Kunststoff bestehen.

5. Lenkrad nach einem der vorangehenden Ansprüche, **dadurch gekennzeichnet,**
- **dass** die Scherenvorrichtung (930) zwischen einer Trägerplatte (965) und einer Abdeckplatte (980) angeordnet ist,
- **dass** die Trägerplatte (965) derart ausgestaltet ist, dass sie mit dem Lenkrad koppelbar ist,
- **dass** die Abdeckplatte (980) der Trägerplatte (965) gegenüber liegt und mit dem Betätigungselement gekoppelt ist,
- **dass** die Abdeckplatte (980) und die Trägerplatte (965) üblicherweise mittels eines Führungselementes einen vorgegebenen Abstand aufweisen,
- und **dass** es der Abdeckplatte (980) möglich ist, sich bei einer Druckausübuhg auf das Betätigungselement der Trägerplatte (965) zu nahem, wobei die Abdeckplatte (980) durch das Führungselement geführt wird.

6. Lenkrad nach Anspruch 5, **dadurch gekennzeichnet, dass** die Scherenvorrichtung. (930) zumindest mit der Trägerplatte (965) oder der Abdeckplatte (980) mittels des zumindest einen Clip- in der Einschritt-Montageweise befestigbar ist.

7. Lenkrad nach Anspruch 5 oder 6, **dadurch gekennzeichnet, dass** das Airbagmodul mit einem Gasgenerator, einem Gassack und einer Abdeckkappe (912) auf der Abdeckplatte (980) befestigt ist.

8. Lenkrad nach einem der vorangehenden Ansprüche 5. bis 7, **dadurch gekennzeichnet, dass** die Scherenvorrichtung (930) ein Führungselement aufweist.

9. Lenkrad nach einem der vorangehenden Ansprüche 5 bis 7, **dadurch gekennzeichnet, dass** das Führungselement separat von dem Scherenelement (930a bzw. 930b) angeordnet ist.

10. Lenkrad nach einem der vorangehenden Ansprüche 5 bis 9, **dadurch gekennzeichnet, dass** das Betätigungselement, die Abdeckplatte (980), die Scherenvorrichtung (930) und die Trägerplatte (965) derart vormontiert sind, dass sie eine vormontierte Einheit bilden, die auf dem Lenkrad befestigt wird.

11. Lenkrad nach Anspruch 10, **dadurch gekennzeichnet, dass** die vormontierte Einheit entfernbar oder abnehmbar auf dem Lenkrad befestigt ist.

12. Lenkrad nach einem der vorangehenden Ansprüche 5 bis 11, **dadurch gekennzeichnet, dass** eine Schalteinrichtung (901) vorhanden ist, die die Fahrzeughupe aktiviert, wobei die Schalteinrichtung (901) derart ausgestaltet ist, dass sie eingeschaltet wird, wenn sich die Abdeckplatte (980) und die Trägerplatte (965) nähern, wobei die Abdeckplatte mittels des Führungselements geführt wird.

## Claims

1. Steering wheel for a motor vehicle having a vehicle horn and an activation element (965) which triggers the vehicle horn when pressure is applied by an operator, **characterized in that**
- the activation element is attached to, or mounted on, a scissor device (930) in such a way that the activation element (965) can move exclusively in a direction which is predefined by the scissor device,
- the scissor device (930) being attached to the activation element in a single-step manner by means of at least one clip.

2. Steering wheel according to Claim 1, **characterized in that** the scissor device (930) stabilizes the user's pressing force for triggering the vehicle horn.

3. Steering wheel according to Claim 1 or 2, **characterized in that** the at least one clip is attached to the scissor device (930), specifically essentially in an end region of one of the scissor elements (930a, 930b), and **in that** the scissor element connects the activation element to the steering wheel body by means of a securing or bearing element (932).

4. Steering wheel according to Claim 3, **characterized in that** the at least one clip or at least one of the securing or bearing elements (932) is composed of resin or plastic.

5. Steering wheel according to one of the preceding claims, **characterized**
- **in that** the scissor device (930) is arranged between a carrier plate (965) and a cover plate (980),
- **in that** the carrier plate (965) is configured in such a way that it can be coupled to the steering wheel,
- **in that** the cover plate (980) is located opposite the carrier plate (965) and is coupled to the activation element,
- **in that** the cover plate (980) and the carrier plate (965) usually have a predefined distance by means of a guide element,
- and **in that** it is possible for the cover plate (980) to approach the carrier plate (965) when pressure is applied to the activation element, the cover plate (980) being guided by the guide element.

6. Steering wheel according to Claim 5, **characterized in that** the scissor device (930) can be attached at least to the carrier plate (965) or to the cover plate (980) by means of the at least one clip using the single-step mounting method.

7. Steering wheel according to Claim 5 or 6, **characterized in that** the airbag module is attached to a gas generator, an airbag and a cover cap (912) on the cover plate (980).

8. Steering wheel according to one of the preceding Claims 5 to 7, **characterized in that** the scissor device (930) has a guide element.

9. Steering wheel according to one of the preceding Claims 5 to 7, **characterized in that** the guide element is arranged separately from the scissor element (930a or 930b).

10. Steering wheel according to one of the preceding Claims 5 to 9, **characterized in that** the activation element, the cover plate (980), the scissor device (930) and the carrier plate (965) are premounted in such a way that they form a premounted unit which is attached to the steering wheel.

11. Steering wheel according to Claim 10, **characterized in that** the premounted unit is attached to the steering wheel in such a way that it can be removed or taken off.

12. Steering wheel according to one of the preceding Claims 5 to 11, **characterized in that** there is a switching device (901) which activates the vehicle horn, the switching device (901) being configured in such a way that it is switched on when the cover plate (980) and the carrier plate (965) approach one another, the cover plate being guided by means of the guide element.

## Revendications

1. Volant pour un véhicule pourvu d'un avertisseur sonore avec un élément de commande (965) qui déclenche l'avertisseur sonore en cas de pression par un utilisateur,
**caractérisé en ce que**
- l'élément de commande est fixé ou logé de telle sorte que sur un dispositif de cisaillement (930), l'élément de commande (965) est amovible exclusivement dans une direction définie par le dispositif de cisaillement,
- le dispositif de cisaillement (930) étant fixé à l'élément de commande en une seule étape à l'aide d'au moins un clip.

2. Volant selon la revendication 1, **caractérisé en ce que** le dispositif de cisaillement (930) stabilise l'effort de pression côté utilisateur pour déclencher l'avertisseur sonore.

3. Volant selon la revendication 1 ou 2, **caractérisé en ce que** le au moins un clip est fixé au dispositif de cisaillement (930), et ce essentiellement à une extrémité d'un des ciseaux (930a, 930b), et **en ce que** le ciseau relie l'élément de commande au corps du volant à l'aide d'un élément de maintien ou d'appui (932).

4. Volant selon la revendication 3, **caractérisé en ce que** le au moins un clip ou au moins un des éléments de maintien ou d'appui (932) est en résine ou en plastique.

5. Volant selon l'une quelconque des revendications précédentes, **caractérisé**
- **en ce que** le dispositif de cisaillement (930) est disposé entre une plaque support (965) et une plaque de recouvrement (980),
- **en ce que** la plaque support (965) est formée de telle sorte qu'elle peut être couplée au volant,
- **en ce que** la plaque de recouvrement (980) est opposée à la plaque support (965) et est couplée à l'élément de commande,
- **en ce que** la plaque de recouvrement (980) et la plaque support (965) présentent habituellement un espacement défini au moyen d'un élément de guidage,
- et **en ce qu'**il est possible à la plaque de recouvrement (980) de se rapprocher de la plaque support (965) en cas de pression sur l'élément de commande, la plaque de recouvrement (980) étant guidée par l'élément de guidage.

6. Volant selon la revendication 5, **caractérisé en ce que** le dispositif de cisaillement (930) peut être fixé à au moins la plaque support (965) ou la plaque de recouvrement (980) par montage en une seule étape à l'aide du au moins un clip.

7. Volant selon la revendication 5 ou 6, **caractérisé en ce que** le module airbag est fixé sur la plaque de recouvrement (980) avec un générateur de gaz, un sac de gaz et un capuchon (912).

8. Volant selon l'une quelconque des revendications 5 à 7 précédentes, **caractérisé en ce que** le dispositif de cisaillement (930) présente un élément de guidage.

9. Volant selon l'une quelconque des revendications 5 à 7 précédentes, **caractérisé en ce que** l'élément de guidage est disposé séparément du ciseau (930a ou 930b).

10. Volant selon l'une quelconque des revendications 5 à 9 précédentes, **caractérisé en ce que** l'élément de commande, la plaque de recouvrement (980), le dispositif de cisaillement (930) et la plaque support (965) sont prémontés de telle manière qu'ils forment une unité prémontée qui est fixée sur le volant.

11. Volant selon la revendication 10, **caractérisé en ce que** l'unité prémontée est fixée sur le volant de façon démontable ou amovible.

12. Volant selon l'une quelconque des revendications 5 à 11 précédentes, **caractérisé en ce qu'**il existe un dispositif de commutation (901) qui active l'avertisseur sonore, le dispositif de commutation (901) étant conçu de telle sorte qu'il est enclenché lorsque la plaque de recouvrement (980) et la plaque support (965) se rapprochent, la plaque de recouvrement étant guidée à l'aide de l'élément de guidage.
